# EUROPEAN PATENT SPECIFICATION

(11) **EP 3 453 907 B1**
(45) Date of publication and mention of the grant of the patent: **30.09.2020**
(21) Application number: 18765795.2
(22) Date of filing: 10.04.2018
(51) Int. Cl.: F16D 23/14, F16C 19/06, F16C 33/58, F16D 13/74, F16C 33/66, F16C 33/76

(54) **BEARING FOR CLUTCH**
LAGER FÜR GETRIEBE
PALIER POUR UN EMBRAYAGE

(30) Priority: 27.07.2017 JP 2017145744; 14.02.2018 JP 2018023982
(43) Date of publication of application: 13.03.2019
(73) Proprietor: NSK Ltd., Tokyo 141-8560 (JP)
(72) Inventor: TANAKA Takanori, Fujisawa-shi Kanagawa 251-8501 (JP); URAKAMI Seigou, Fujisawa-shi Kanagawa 251-8501 (JP); NAKAMURA Seiji, Fujisawa-shi Kanagawa 251-8501 (JP)
(74) Representative: Grünecker Patent- und Rechtsanwälte PartG mbB
(86) International application number: PCT/JP2018/015146
(87) International publication number: WO 2019/021544

(56) References cited:
- EP-A1- 1 564 435
- EP-A1- 2 505 865
- DE-A1-102007 013 694
- DE-A1-102014 209 418
- DE-A1-102014 209 418
- DE-A1-102015 211 857
- DE-U1- 29 701 982
- FR-A1- 2 704 916
- GB-A- 1 245 451
- JP-A- H09 177 827
- JP-A- 2010 053 984
- JP-U- S56 129 617
- US-A- 3 885 658
- US-A- 4 881 629
- US-A1- 2013 223 779

## Description

### TECHNICAL FIELD

The present invention relates to a bearing clutch according to the preamble of claim 1. Such clutch is known from Patent Document 1.

### RELATED ART

A clutch used with a friction plate to be mounted to a vehicle and the like is configured to axially press a diaphragm spring of a clutch cover by a release fork which is an input member, thereby releasing an urging force of the diaphragm spring from the friction plate to thus cut off power transmission.

The release fork is arranged at a fixed side such as a vehicle body, and the diaphragm spring is mounted to the clutch cover configured to rotate integrally with a flywheel or the like of an engine with being mounted thereto. Therefore, when the diaphragm spring configured to rotate together with the clutch cover is directly pressed by the release fork, the wear occurs at a contact part between the release fork and the diaphragm spring. Thus, for preventing the wear, a clutch release bearing is arranged between the diaphragm spring and the release fork, a rotating ring is integrally rotated with being in contact with the diaphragm spring, and a guide sleeve to which an input from the release fork is to be applied is contacted to a fixed ring.

When using the clutch release bearing for a clutch in a state where the friction plate is immersed in lubricant, the clutch release bearing is used under a lubrication environment in which wear pieces from the friction plate are included (contaminated). Therefore, the wear pieces are deposited in the clutch release bearing, so that the clutch release bearing may be damaged. Also, when the lubricant stays in the bearing, rotating torque increases due to a stirring resistance. In Patent Document 1, one axial side part of an outer ring is formed to have a substantial U-shape, and an overlapping part at which an outer peripheral surface of a folded back part of the outer ring and an inner peripheral surface of an inner ring axially overlap with each other is provided with a predetermined radial gap to limit inflow of the lubricant, so that the deposition of the wear pieces in the clutch release bearing is suppressed and the flow of the lubricant in the entire clutch device is controlled. Patent Document 2 and Patent Document 3 each disclose dry clutch bearings with a sealed cavity formed between an inner ring and an outer ring, which sealed cavity is sealed by sealing elements and receives a plurality of balls, rollably arranged between the outer and the inner ring.

### Citation List

### Patent Documents

Patent Document 1: DE-A-102014209418
Patent Document 2: DE 10 2007 013694 A1
Patent Document 3: FR 2 704 916 A1

### SUMMARY OF THE INVENTION

### Problems To Be Solved By the Invention

However, according to Patent Document 1, the radial gap between the outer peripheral surface of the folded back part of the outer ring and the inner peripheral surface of the inner ring is constant, and outflow (supply to a raceway) of the lubricant caused to flow into the radial gap is not considered. Also, Patent Document 1 does not describe reduction in the stirring resistance against the lubricant caused to flow into the raceway by a cage.

The present invention has been made in view of the above situations, and an object thereof is to provide a bearing for a clutch capable of reducing rotating torque by controlling an oil amount and a flow of lubricant to be supplied to the bearing for a clutch and thus reducing a stirring resistance of the lubricant.

### Means For Solving the Problems

The object of the present invention is achieved by following configurations.
(1) A bearing for a clutch comprising:
   an outer ring integrally including an outer ring raceway formed on an inner peripheral surface thereof, an outer ring small-diameter part extending toward one axial side with respect to the outer ring raceway, an outer ring large-diameter part extending toward the other axial side with respect to the outer ring raceway, a radial wall part extending from an axial end portion of the outer ring small-diameter part toward an inner diameter-side, and a folded-back part extending from a radially inner end portion of the radial wall part toward the other axial side, the outer ring being a press-molded product;
   an inner ring including an inner ring raceway formed on an outer peripheral surface thereof, an inner ring small-diameter part extending toward one axial side with respect to the inner ring raceway, and an inner ring large-diameter part extending toward the other axial side with respect to the inner ring raceway;
   a plurality of balls rollably arranged between the outer ring raceway and the inner ring raceway, the plurality of balls being in contact with both the raceways at predetermined contact angles, and
   a cage configured to rollably hold the plurality of balls,
   wherein the folded-back part of the outer ring radially overlaps the inner ring small-diameter part with a radial gap between the folded-back part and an inner peripheral surface of the inner ring small-diameter part, and
   wherein the radial gap of an inner diameter-side entry formed by an axial end of the folded-back part and the inner peripheral surface of the inner ring small-diameter part is smaller than the radial gap of an inner diameter-side exit formed by an axial end of the inner ring small-diameter part and an outer peripheral surface of the folded-back part, limiting the amount of lubricant to be supplied from the inner diameter-side entry gap to the bearing smoothly introducing the lubricant from the inner diameter-side exit gap to the inside of the bearing and controlling an oil amount of a flow of the lubricant, and that the inner ring is a rotating ring.
(2) The bearing for a clutch of the above (1), wherein the inner ring small-diameter part is formed with an inner ring taper part, and a diameter of an inner peripheral surface of the inner ring taper part increases toward the axial end of the inner ring small-diameter part.
(3) The bearing for a clutch of the above (1), wherein the folded-back part of the outer ring is formed with an outer ring taper part, and a diameter of an outer peripheral surface of the outer ring taper part increases toward the axial end of the folded-back part.
(4) The bearing for a clutch of one of the above (1) to (3), wherein a ratio of the radial gap of the inner diameter-side exit to the radial gap of the inner diameter-side entry is 1:1.2 to 1:5.0.
(5) The bearing for a clutch of the above (1), wherein the inner ring small-diameter part is formed with an inner ring taper part, and a diameter of an inner peripheral surface of the inner ring taper part increases toward the axial end of the inner ring small-diameter part, and
   wherein the folded-back part of the outer ring is formed with an outer ring taper part, and a diameter of an outer peripheral surface of the outer ring taper part increases toward the axial end of the folded-back part.
(6) The bearing for a clutch of the above (5), wherein a ratio of the radial gap of the inner diameter-side exit to the radial gap of the inner diameter-side entry is 1:1.4 to 1:10.0.
(7) The bearing for a clutch of one of the above (1) to (6), wherein the inner ring has a flange part extending from an axial end portion of the inner ring large-diameter part toward an outer diameter-side and facing an axial end of the outer ring large-diameter part with an axial gap between the flange part and the axial end of the outer ring large-diameter part, and
   wherein the axial gap is larger than the radial gap of the inner diameter-side exit.
(8) The bearing for a clutch of one of the above (1) to (7), wherein the cage has a small circular ring part, a large circular ring part and a plurality of column parts configured to axially connect the small circular ring part and the large circular ring part, and
   wherein a sum of cross-sectional areas of gaps between the small circular ring part and the outer ring and inner ring is smaller than a sum of cross-sectional areas of gaps between the large circular ring part and the outer ring and inner ring.
(9) The bearing for a clutch of one of the above (1) to (8), wherein the outer ring and the inner ring are formed by pressing a metal plate of an alloy material or a steel material, in which carbon of 0.7 to 0.9 weight%, manganese of 0.3 to 0.9 weight%, chromium of 0.3 to 1.0 weight% and silicone of 0.01 to 0.15 weight% are contained, and an ironing rate of the folded-back part is equal to or higher than 60%.
(10) The bearing for a clutch of one of the above (1) to (9), wherein the inner ring has a flange part extending from an axial end portion of the inner ring large-diameter part toward an outer diameter-side and facing an axial end of the outer ring large-diameter part with an axial gap between the flange part and the axial end of the outer ring large-diameter part, and
   wherein at least one of an outer surface of the radial wall part of the outer ring and an outer surface of the flange part of the inner ring is formed with a locking part capable of engaging with a counter member.

### Effects of the Invention

According to the bearing for a clutch of the present invention, the outer ring has the outer ring small-diameter part extending toward one axial side with respect to the outer ring raceway, the radial wall part extending from the axial end portion of the outer ring small-diameter part toward the inner diameter-side, and the folded-back part extending from the inner end portion of the radial wall part toward the other axial side and radially overlapping the inner ring small-diameter part with the radial gap between the folded-back part and the inner peripheral surface of the inner ring small-diameter part. Also, the radial gap of the inner diameter-side entry formed by the axial end of the folded-back part and the inner peripheral surface of the inner ring small-diameter part is smaller than the radial gap of the inner diameter-side exit formed by the axial end of the inner ring small-diameter part and the outer peripheral surface of the folded-back part. Thereby, an amount of lubricant to be supplied from the radial gap of the inner diameter-side entry to the bearing for a clutch is limited, and the lubricant is smoothly discharged from the radial gap of the inner diameter-side exit to an inside (a part to be lubricated) of the bearing for a clutch, so that an oil amount and a flow of the lubricant are controlled to reduce a stirring resistance of the lubricant, thereby suppressing rotating torque.

### BRIEF DESCRIPTION OF THE DRAWINGS

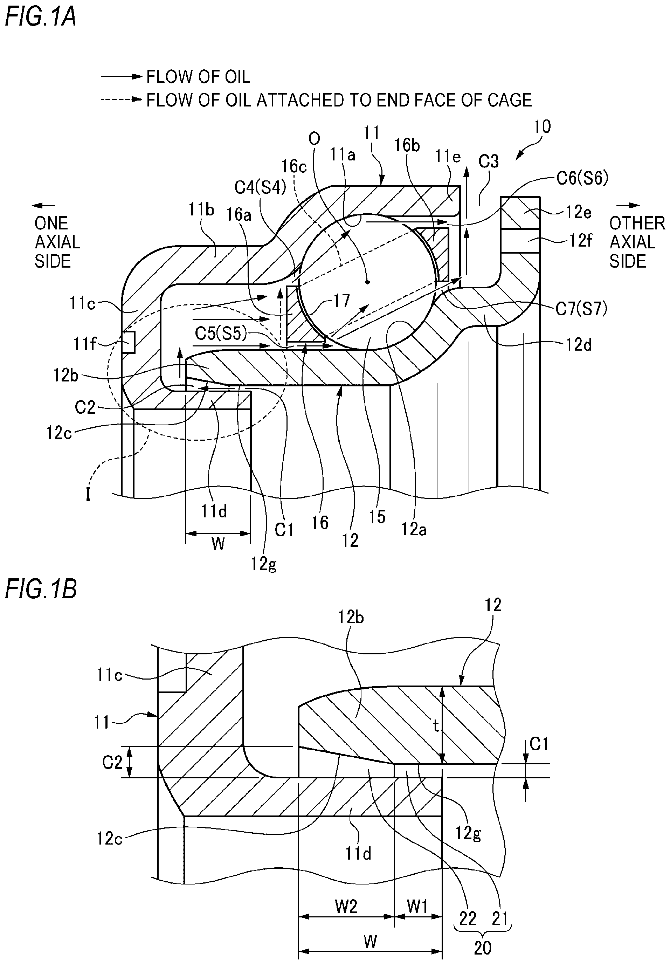

FIG. IA is an enlarged sectional view of main parts of a bearing for a clutch in accordance with a first embodiment of the present invention, and FIG. 1B is an enlarged view of the I part of FIG. 1A.
FIG. 2 is an enlarged sectional view of main parts of a bearing for a clutch in accordance with a second embodiment of the present invention.
FIG. 3 is an enlarged sectional view of main parts of a bearing for a clutch in accordance with a third embodiment of the present invention.

### DETAILED DESCRIPTION OF EMBODIMENTS

Hereinafter, a bearing for a clutch in accordance with each embodiment of the present invention will be described in detail with reference to the drawings.

### (First Embodiment)

As shown in FIG. 1A, a bearing 10 for a clutch of a first embodiment is an angular ball bearing including a substantially circular ring-shaped outer ring 11, a substantially circular ring-shaped inner ring 12 formed concentrically with the outer ring 11, a plurality of balls 15 which is rollably arranged between an outer ring raceway 11a formed on an inner peripheral surface of the outer ring 11 and an inner ring raceway 12a formed on an outer peripheral surface of the inner ring 12 and which is in contact with both the raceways 11a, 12a at predetermined contact angles, and a cage 16 configured to hold the balls 15 with predetermined intervals. The respective raceways 11a, 12a and rolling surfaces of the balls 15 of the bearing 10 for a clutch are lubricated by lubricant to be supplied.

The outer ring raceway 11a is located closely to one axial side (a left side, in FIG. 1A) with respect to a center O of the plurality of balls 15 in FIG. 1A, and has a curved surface of about 1/4 of a maximum outer shape of the ball 15. Also, the outer ring 11 has a circular ring-shaped outer ring small-diameter part 11b extending from a part configuring the outer ring raceway 11a toward one axial side, a circular ring-shaped outer ring large-diameter part 11e extending from a part configuring the outer ring raceway 11a toward the other axial side (a right side, in FIG. 1A), a radial wall part 11c extending from an axial end portion of the outer ring small-diameter part 11b toward an inner diameter-side, and a folded-back part 11d extending from a radially inner end portion of the radial wall part 11c toward the other axial side.

Therefore, a part of one axial side of the outer ring 11 has a substantially C-shaped section.

Also, a part of the folded-back part 11d is arranged at an inner diameter-side of an inner ring small-diameter part 12b (which will be described later) with a radial gap being interposed therebetween. Thereby, the folded-back part 11d and the inner ring small-diameter part 12b form an overlapping part 20 (refer to FIG. 1B) at which they radially overlap over an axial length W. An outer peripheral surface of the folded-back part 11d is formed as a cylindrical surface having a constant outer diameter within a range of the overlapping part 20.

The inner ring raceway 12a is located closely to the other axial side with respect to the center O of the plurality of balls 15 in FIG. 1A, and has a curved surface of about 1/4 of the maximum outer shape of the ball 15. The inner ring 12 has a circular ring-shaped inner ring small-diameter part 12b extending from a part configuring the inner ring raceway 12a toward one axial side, a circular ring-shaped inner ring large-diameter part 12d extending from a part configuring the raceway 12a toward the other axial side, and a flange part 12e extending radially outward from the other axial end side of the inner ring large-diameter part 12d. An inner peripheral surface of the inner ring small-diameter part 12b is formed with an inner ring taper part 12c of which a diameter increases toward an axial end of the inner ring small-diameter part 12b and a cylindrical surface part 12g having an inner peripheral surface of which an inner diameter is constant. In the meantime, an axial boundary position between the cylindrical surface part 12g and the inner ring taper part 12c may be located more closely to one axial side than an axial end of the folded-back part 11d, as shown in FIG. 1B, or may be located more closely to the other axial side than the axial end of the folded-back part 11d.

In particular, as shown in FIG. 1B, when the axial boundary position between the cylindrical surface part 12g and the inner ring taper part 12c is located more closely to one axial side than the axial end of the folded-back part 11d, the overlapping part 20 is configured by a parallel gap portion 21 and a tapered gap portion 22. The parallel gap portion 21 has an axial length W1, is configured by the other axial side of the overlapping part 20, and is formed between an inner peripheral surface of the cylindrical surface part 12g and an outer peripheral surface of the folded-back part 11d. The parallel gap portion 21 defines a radial entry gap (hereinafter, referred to as "inner diameter-side entry gap") C1 of which a gap dimension is axially constant.

On the other hand, the tapered gap portion 22 has an axial length W2 (=W-W1), is configured by one axial side of the overlapping part 20, and is formed between an inner peripheral surface of the inner ring taper part 12c and an outer peripheral surface of the folded-back part 11d. A radial gap of the tapered gap portion 22 gradually increases toward one axial side, and defines a radial exit gap (hereinafter, referred to as "inner diameter-side exit gap") C2 that is largest at one axial side end portion of the radial gap.

In this case, the inner diameter-side entry gap C1 is set smaller than the inner diameter-side exit gap C2. Specifically, like the first embodiment, when the outer peripheral surface of the folded-back part 11d is formed to have a constant diameter and the radial gap is changed only by the inner ring taper part 12c, a ratio of the inner diameter-side exit gap C2 to the inner diameter-side entry gap C1 is preferably set to be 1:1.2 to 1:5.0.

Also, in this case, a ratio of the length W1 of the parallel gap portion 21 and the length W of the overlapping part 20 is preferably W1/W=0.1 to 0.5, and more preferably 0.2 to 0.4.

The length W1 of the parallel gap portion 21 is secured by 0.1 or greater with respect to the length W of the overlapping part 20, so that it is easy to control an inflow amount of the lubricant. Also, the length W1 of the parallel gap portion 21 is set to 0.5 or smaller with respect to the length W of the overlapping part 20, so that it is possible to design an inclination of the inner ring taper part 12c so as to be a gentle gradient.

Also, a ratio of the length W1 of the parallel gap portion 21 and the inner diameter-side entry gap C1 is preferably (the length W1 of the parallel gap portion 21)/(the inner diameter-side entry gap C1)=1 to 5, and more preferably 2 to 4.

The length W1 of the parallel gap portion 21 is secured by 1 or greater with respect to the inner diameter-side entry gap C1, so that it is easy to control the inflow amount of the lubricant. Also, the length W1 of the parallel gap portion 21 is set to 5 or smaller with respect to the inner diameter-side entry gap C1, so that it is easy to avoid contact between the inner ring small-diameter part 12b and the folded-back part 11d.

Also, a ratio of the length W of the overlapping part 20 and an inner ring plate thickness t of the cylindrical surface part 12g of the inner ring small-diameter part 12b is preferably (the length W of the overlapping part 20)/(the inner ring plate thickness t)=1 to 2, and more preferably 1.2 to 1.8.

Also, the flange part 12e of the inner ring 12 faces an axial end of the outer ring large-diameter part 11e, and an axial gap (hereinafter, referred to as "outer diameter-side exit gap") C3 is formed between the flange part 12e and the axial end of the outer ring large-diameter part 11e.

The outer diameter-side exit gap C3 is set greater than the inner diameter-side exit gap C2. That is, dimensions of the respective gaps increase in order of the inner diameter-side entry gap C1, the inner diameter-side exit gap C2, and the outer diameter-side exit gap C3 (C1<C2<C3).

The outer ring 11 and the inner ring 12 are made by pressing and heat-treating a plate material of an alloy material or a steel material, in which carbon of 0.7 to 0.9 weight%, manganese of 0.3 to 0.9 weight%, chromium of 0.3 to 1.0 weight% and silicone of 0.01 to 0.15 weight% are contained. For example, PCR5 may be used.

The reasons to include the respective elements and to define the contents thereof are described. In order to obtain high hardness of HRC60 or higher necessary for the outer ring 11 and the inner ring 12 by a quenching treatment, a carbon amount of 0.7 weight% or more is required. However, when the carbon amount exceeds 0.9 weight%, the deep drawability is lowered. Silicone is added as a deoxidizing agent upon the steel making and is normally contained in an amount of 0.01 weight% or more. However, when silicone is contained in an amount more than 0.15 weight%, ferrite is reinforced and the deep drawability is lowered. Therefore, the content of silicone is set to 0.15 weight% or less. Manganese is added as a deoxidizing agent, like silicone, thereby improving the hardenability. However, when manganese is added too much, a deformation resistance is increased. Therefore, an upper limit thereof is set to 0.9 weight%. Chromium is added in an amount of 0.3 weight% or more so as to improve the hardenability. However, when the content of chromium exceeds 1.0 weight%, the deep drawability is lowered. Therefore, an upper limit thereof is set to 1.0 weight%.

Like this, the outer ring 11 is made by the material having high ductility and workability, so that it is possible to set an ironing rate of the folded-back part 11d to 60% or higher, and preferably 60 to 65%, and the workability is improved. In the meantime, the ironing rate means a reduction rate of a plate thickness after ironing to a plate thickness before ironing.

At a clutch part, the inner ring and outer ring of the bearing are not fitted with a shaft and a housing, and are in contact with the other components only at flat surface parts of both sides of the bearing after mounting. When the outer ring 11 is configured as a fixed ring and the inner ring 12 is configured as a rotating ring, it is required that the outer ring 11 should be connected to the other component (for example, a guide sleeve) without sliding and the inner ring 12 should rotate without sliding relative to the other component (for example, a diaphragm spring). For this reason, in general, a load is axially applied so as to apply frictional forces between the outer ring 11 and the guide sleeve and between the inner ring 12 and the diaphragm spring. However, when the high axial load is applied to the bearing 10 for a clutch, the rotating torque increases, so that a fuel consumption of a vehicle may be deteriorated.

The bearing 10 for a clutch of the first embodiment has concave parts 11f or hole 12f, which are locking parts configured to engage with protrusions (not shown) of counter members (the guide sleeve and the diaphragm spring) and provided at at least three places of outer surfaces of the radial wall part 11c of the outer ring 11 and the flange part 12e of the inner ring 12 in a circumferential direction. The protrusions of the counter members are engaged to the concave parts 11f or the hole 12f and the rotation is thus prevented, so that it is not necessary to apply the axial load for sliding prevention and improvement on the fuel consumption is thus expected. Thereby, the axial load necessary for the bearing 10 for a clutch is only a preload for removing an axial backlash of the bearing.

Both the locking parts may be configured only by the concave parts 11f or only by the hole 12f or by a combination of the concave part 11f and the hole 12f. The concave part 11f and the hole 12f may be formed only in the outer surface of the radial wall part 11c, only in the outer surface of the flange part 12e of the inner ring 12, or in both the outer surfaces of the radial wall part 11c and the flange part 12e. Also, the concave part and the hole may be formed in the counter member and the protrusions functioning as the locking part may be formed on the outer surfaces of the radial wall part 11c and the flange part 12e.

Also, the outer surfaces of the radial wall part 11c of the outer ring 11 and the flange part 12e of the inner ring 12 may be roughened to increase the frictional force.

The cage 16 has a small circular ring part 16a arranged at each small diameter part-side of the bearing 10 for a clutch, a large circular ring part 16b arranged at a large diameter part-side, and a plurality of column parts 16c configured to connect the small circular ring part 16a and the large circular ring part 16b in an axially inclined direction. A pocket 17 for holding the ball 15 is formed by axially inner surfaces of the small circular ring part 16a and the large circular ring part 16b and circumferential side surfaces of the adjacent column parts 16c.

A sum (S4+S5) of a cross-sectional area S4, as seen from the axial direction, of a circular ring-shaped gap C4 formed by an outer peripheral surface of the small circular ring part 16a and an inner peripheral surface of the outer ring small-diameter part 11b and a cross-sectional area S5, as seen from the axial direction, of a circular ring-shaped gap C5 formed by an inner peripheral surface of the small circular ring part 16a and an outer peripheral surface of the inner ring small-diameter part 12b is set smaller than a sum (S6+S7) of a cross-sectional area S6, as seen from the axial direction, of an outer peripheral surface of the large circular ring part 16b and an inner peripheral surface of the outer ring large-diameter part 11e and a cross-sectional area S7, as seen from the axial direction, of a circular ring-shaped gap C7 formed by an inner peripheral surface of the large circular ring part 16b and an outer peripheral surface of the inner ring large-diameter part 12d. This configuration can be made by causing a radial width of the small circular ring part 16a to be different from a radial width of the large circular ring part 16b. Also, the cross-sectional area S5, as seen from the axial direction, of the circular ring-shaped gap C5 is set smaller than the cross-sectional area S4, as seen from the axial direction, of the circular ring-shaped gap C4.

Meanwhile, in the first embodiment, the respective circular ring-shaped gaps C4 to C7 are defined at axially outer end positions (one axial side end portion of the small circular ring part 16a and the other axial side end portion of the large circular ring part 16b) of the small circular ring part 16a and the large circular ring part 16b.

Subsequently, oil amount control of the lubricant by the gaps C1 to C7 of the respective parts of the bearing 10 for a clutch is described.

The lubricant for lubricating rolling surfaces of the bearing 10 for a clutch is introduced from the inner diameter-side entry gap C1 and is supplied to the inside through the inner diameter-side exit gap C2 and the circular ring-shaped gaps C4 and C5 between the small circular ring part 16a of the cage 16 and the outer ring 11 and inner ring 12, thereby lubricating the parts to be lubricated (rolling surfaces). The lubricant which lubricated the parts to be lubricated (sliding contact surfaces between the balls 15 and the respective raceways 11a, 12a and between the balls 15 and the cage 16) is discharged to an outside from the circular ring-shaped gaps C6 and C7 between the large circular ring part 16b of the cage 16 and the outer ring 11 and inner ring 12 and the outer diameter-side exit gap C3 between the flange part 12e and the axial end of the outer ring large-diameter part 11e.

Here, since the inner diameter-side entry gap C1 is set smaller than the inner diameter-side exit gap C2, the inflow of the lubricant beyond necessity is suppressed by the inner diameter-side entry gap C1. Also, the introduced lubricant is smoothly discharged (introduced into a space in the bearing) from the larger inner diameter-side exit gap C2. Specifically, the lubricant introduced from the inner diameter-side entry gap C1 is moved toward one axial side along the inner ring taper part 12c by the centrifugal force of the inner ring 12 being rotated, and is then thrown and scattered into the space in the bearing from the axial end of the inner ring small-diameter part 12b. Also, since the outer diameter-side exit gap C3 is set greater than the inner diameter-side exit gap C2, the lubricant having lubricated the parts to be lubricated is smoothly discharged to the outside of the bearing 10 for a clutch without staying in the bearing 10 for a clutch, so that the stirring resistance of the lubricant is reduced.

Also, the sum of the cross-sectional areas S4 and S5, as seen from the axial direction, of the circular ring-shaped gaps C4 and C5 between the small circular ring part 16a of the cage 16 and the outer ring 11 and inner ring 12 is set smaller than the sum of the cross-sectional areas S6 and S7, as seen from the axial direction of the circular ring-shaped gaps C6 and C7 between the large circular ring part 16b of the cage 16 and the outer ring 11 and inner ring 12. Accordingly, an oil amount to be introduced to the part to be lubricated is suppressed to a necessary amount, and the introduced lubricant is discharged from the circular ring-shaped gaps C6 and C7 without staying in the parts to be lubricated for a long time. Also, since the cross-sectional area S5, as seen from the axial direction, of the circular ring-shaped gap C5 is set smaller than the cross-sectional area S4, as seen from the axial direction, of the circular ring-shaped gap C4, the more lubricant flows to the outer ring 11 and the stirring of the lubricant by the column parts 16c of the cage 16 is reduced.

In particular, the lubricant introduced from the circular ring-shaped gap C4 is moved to the outer diameter-side along the outer ring raceway 11a by the centrifugal force of the bearing being rotated and is then discharged from the circular ring-shaped gap C6. On the other hand, most of the lubricant introduced from the circular ring-shaped gap C5 is guided to the inclined column part 16c (along the surface of the inner diameter-side of the column part 16c) by the centrifugal force of the bearing being rotated, and is then discharged from the circular ring-shaped gap C7. Also, a part of the lubricant introduced from the circular ring-shaped gap C5 passes (lubricates) between the ball 15 and the pocket 17, and is then discharged from the circular ring-shaped gap C6. In this way, since the lubricant of which the inflow is limited by the circular ring-shaped gaps C4 and C5 is positively discharged from the parts to be lubricated, the lubricant does not stay in the vicinity of the column parts 16c of the cage 16.

Also, when an area, as seen from the axial direction, of the small circular ring part 16a of the cage 16 is denoted as S16a, a ratio of the area 16a, as seen from the axial direction, of the small circular ring part 16a to a cross-sectional area S1 (S1=S4+S5+S16a), as seen from the axial direction, between the inner and outer rings at the axial end face position of the small circular ring part 16a is preferably S16a/S1=0.6 to 0.9, and more preferably 0.7 to 0.8.

When S16a/S1 is set to 0.6 or greater, it is possible to secure an amount of the oil to be attached to the end face of the small circular ring part 16a, to move the attached oil to the outer diameter-side by the centrifugal force resulting from the revolution of the cage, and to increase the ratio of the oil to pass the circular ring-shaped gap C4. On the other hand, when S16a/S1 is set to 0.9 or smaller, it is possible to prevent a situation where a ratio of the cage section excessively increases to deteriorate the entire flow of the oil.

Like this, according to the bearing 10 for a clutch that is used in the lubrication environment of the lubricant, the stirring resistance of the lubricant is reduced, so that the rotating torque is also reduced and the fuel consumption of the vehicle is improved.

As described above, according to the bearing 10 for a clutch of the first embodiment, the outer ring 11 has the outer ring small-diameter part 11b extending toward one axial side with respect to the outer ring raceway 11a, the radial wall part 11c extending from the axial end portion of the outer ring small-diameter part 11b toward the inner diameter-side, and the folded-back part 11d extending from the radially inner end portion of the radial wall part 11c toward the other axial side and radially overlapping the inner ring small-diameter part 12b with the radial gap between the folded-back part and the inner peripheral surface of the inner ring small-diameter part. The inner diameter-side entry gap C1 formed by the axial end of the folded-back part 11d and the inner peripheral surface of the inner ring small-diameter part 12b is smaller than the inner diameter-side exit gap C2 formed by the axial end of the inner ring small-diameter part 12b and the outer peripheral surface of the folded-back part 11d. Accordingly, it is possible to limit the amount of lubricant to be supplied from the inner diameter-side entry gap C1 to the bearing 10 for a clutch, to smoothly introduce the lubricant from the inner diameter-side exit gap C2 to the inside (the parts to be lubricated) of the bearing 10 for a clutch, and to control an oil amount and a flow of the lubricant, thereby reducing the stirring resistance of the lubricant and implementing the low torque.

Also, since the inner ring small-diameter part 12b is formed with the inner ring taper part 12c at which the diameter of the inner peripheral surface of the inner ring small-diameter part increases toward the axial end of the inner ring small-diameter part 12b, it is possible to arbitrarily set the ratio of the inner diameter-side entry gap C1 and the inner diameter-side exit gap C2.

Also, since the ratio of the inner diameter-side exit gap C2 to the inner diameter-side entry gap C1 is 1:1.2 to 1:5.0, it is possible to easily design the radial gap only by the inner ring taper part 12c.

Also, since the outer diameter-side exit gap C3 between the axial end of the outer ring large-diameter part 11e and the flange part 12e of the inner ring 12 is larger than the inner diameter-side exit gap C2, the lubricant in the bearing 10 for a clutch is smoothly discharged to the outside of the bearing 10 for a clutch without staying in the bearing, so that the stirring resistance of the lubricant is reduced.

Also, since the sum of the cross-sectional areas S4, S5 of the gaps C4, C5 between the small circular ring part 16a of the cage 16 and the outer ring 11 and inner ring 12 is smaller than the sum of the cross-sectional areas S6, S7 of the gaps C6, C7 between the large circular ring part 16b and the outer ring 11 and inner ring 12, the lubricant in the bearing 10 for a clutch is smoothly discharged, so that the stirring resistance of the lubricant is reduced.

Also, since the outer ring 11 and the inner ring 12 are made by pressing the metal plate of the alloy material or steel material, in which carbon of 0.7 to 0.9 weight%, manganese of 0.3 to 0.9 weight%, chromium of 0.3 to 1.0 weight% and silicone of 0.01 to 0.15 weight% are contained, and the ironing rate of the folded-back part 11d is equal to or higher than 60%, the folded-back part 11d can be easily formed.

Also, at least one of the outer surface of the radial wall part 11c of the outer ring 11 and the outer surface of the flange part 12e of the inner ring 12 is formed with the locking part such as the concave part 11f or the hole 12f capable of engaging with the protrusion provided at the counter member. Therefore, the rotation is stopped by engaging the protrusion of the counter member and the concave part 11f or the hole 12f. Thereby, it is not necessary to apply the axial load, which has been applied for preventing the sliding, so that the rotating torque is reduced and the fuel consumption is improved.

### (Second Embodiment)

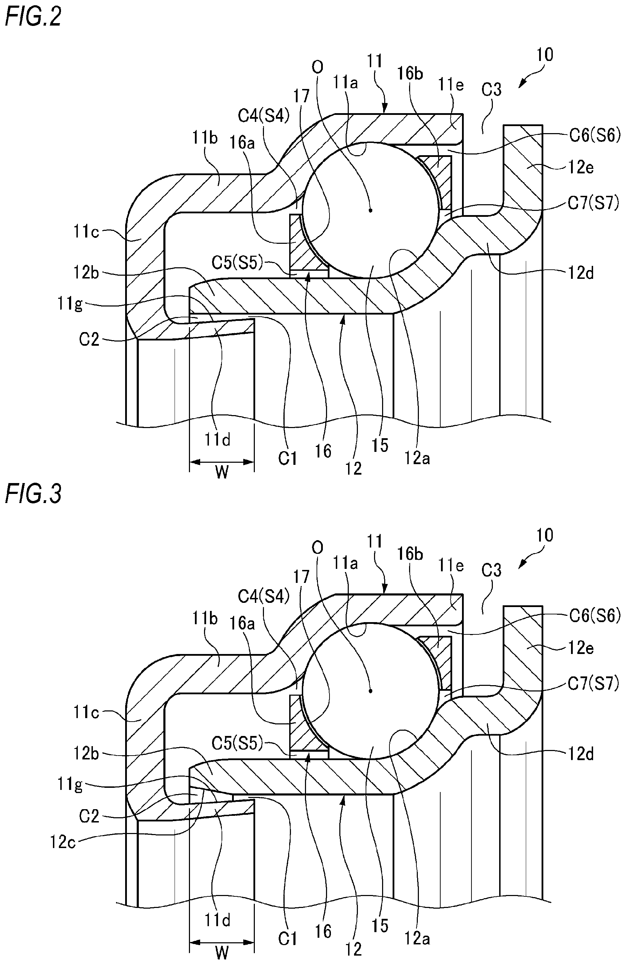

Subsequently, a bearing for a clutch of a second embodiment is described with reference to FIG. 2. In the meantime, in the bearing 10 for a clutch of the second embodiment, the shapes of the folded-back part 11d of the outer ring 11 and the inner ring small-diameter part 12b are different from those of the bearing 10 for a clutch of the first embodiment, and the other parts are substantially the same as the first embodiment of the present invention. Therefore, the parts, which are the same as or equivalent to the first embodiment, are denoted with the same reference numerals, and the descriptions thereof are simplified or omitted.

In the inner ring 12 of the second embodiment, the inner ring small-diameter part 12b axially extends in parallel with a central axis of the bearing 10 for a clutch. In the meantime, the folded-back part 11d of the outer ring 11 is provided with an outer ring taper part 11g formed so that a diameter of the outer peripheral surface of the folded-back part 11d increases toward the axial end (rightward, in FIG. 2) of the folded-back part 11d.

The overlapping part W of the folded-back part 11d of the outer ring 11 and the inner ring small-diameter part 12b is formed with the inner diameter-side entry gap C1 between the axial end of the folded-back part 11d and the inner peripheral surface of the inner ring small-diameter part 12b and the inner diameter-side exit gap C2 between the axial end of the inner ring small-diameter part 12b and the outer peripheral surface of the folded-back part 11d by the outer ring taper part 11g.

Thereby, the inner diameter-side entry gap C1 is set smaller than the inner diameter-side exit gap C2. Specifically, in this case, the inner diameter of the inner peripheral surface of the inner ring small-diameter part 12b is constant, and the ratio of the inner diameter-side exit gap C2 to the inner diameter-side entry gap C1 is set to 1:1.2 to 1:5.0 only by the outer ring taper part 11g.

In this way, according to the bearing 10 for a clutch of the second embodiment, since the folded-back part 11d of the outer ring 11 is formed with the outer ring taper part 11g at which the diameter of the outer peripheral surface of the folded-back part increases toward the axial end of the folded-back part 11d, it is possible to easily set the inner diameter-side entry gap C1 smaller than the inner diameter-side exit gap C2.

The other configurations and operations are the same as the bearing 10 for a clutch of the first embodiment.

### (Third Embodiment)

Subsequently, a bearing for a clutch of a third embodiment is described with reference to FIG. 3. In the bearing 10 for a clutch of the third embodiment shown in FIG. 3, the inner peripheral surface of the inner ring small-diameter part 12b is formed with the inner ring taper part 12c of which the diameter increases toward the axial end of the inner ring small-diameter part 12b, like the bearing 10 for a clutch of the first embodiment. Also, the folded-back part 11d of the outer ring 11 is formed with the outer ring taper part 11g so that the diameter of the outer peripheral surface of the folded-back part 11d increases toward the axial end (rightward, in FIG. 3) of the folded-back part 11d, like the bearing 10 for a clutch of the second embodiment.

The overlapping part W of the folded-back part 11d of the outer ring 11 and the inner ring small-diameter part 12b is formed with the inner diameter-side entry gap C1 between the axial end of the folded-back part 11d and the inner peripheral surface of the inner ring small-diameter part 12b and the inner diameter-side exit gap C2 between the axial end of the inner ring small-diameter part 12b and the outer peripheral surface of the folded-back part 11d by the inner ring taper part 12c and the outer ring taper part 11g.

Thereby, the inner diameter-side entry gap C1 is set smaller than the inner diameter-side exit gap C2. Specifically, in this case, the ratio of the inner diameter-side exit gap C2 to the inner diameter-side entry gap C1 is set to 1:1.4 to 1:10.0 by the inner ring taper part 12c and the outer ring taper part 11g.

According to the bearing 10 for a clutch of the third embodiment, the inner ring taper part 12c and the outer ring taper part 11g are provided, so that the inner diameter-side entry gap C1 is set smaller than the inner diameter-side exit gap C2. Also, it is possible to design the ratio of the inner diameter-side exit gap C2 to the inner diameter-side entry gap C1 within the range of 1:1.4 to 1:10.0.

The other configurations and operations are the same as the bearing 10 for a clutch of the first and second embodiments.

In the meantime, the present invention is defined by the appended claims and is not limited to the respective embodiments, and can be appropriately modified and improved. For example, the bearing for a clutch of the present invention may be a clutch release bearing in which the force is to be applied to the bearing when a clutch is opened, or a clutch engaging bearing in which the force is to be applied to the bearing when the clutch is fastened.

The subject application is based on Japanese Patent Application Nos. 2017-145744 filed on July 27, 2017 and 2018-23982 filed on February 14, 2018.

### Description of Reference Numerals

10: bearing for a clutch, 11: outer ring, 11a: outer ring raceway, 11b: outer ring small-diameter part, 11c: radial wall part, 11d: folded-back part, 11e: outer ring large-diameter part, 11f: concave part (locking part), 11g: outer ring taper part, 12: inner ring, 12a: inner ring raceway, 12b: inner ring small-diameter part, 12c: inner ring taper part, 12d: inner ring large-diameter part, 12e: flange part, 12f: hole (locking part), 12g: cylindrical surface part, 15: ball, 16: cage, 16a: small circular ring part, 16b: large circular ring part, 16c: column part, 17: pocket, C1: inner diameter-side entry gap (radial gap of inner diameter-side entry), C2: inner diameter-side exit gap (radial gap of inner diameter-side exit), C3: outer diameter-side exit gap (axial gap), C4: circular ring-shaped gap (gap between small circular ring part and outer ring), C5: circular ring-shaped gap (gap between small circular ring part and inner ring), C6: circular ring-shaped gap (gap between large circular ring part and outer ring), C7: circular ring-shaped gap (gap between large circular ring part and inner ring), S4: cross-sectional area of gap C4, S5: cross-sectional area of gap C5, S6: cross-sectional area of gap C6, S7: cross-sectional area of gap C7

## Claims

1. A bearing for a clutch (10) comprising:
an outer ring (11) intergrally including an outer ring raceway (11a)
formed on an inner peripheral surface thereof, an outer ring small-diameter part (11b) extending toward one axial side with respect to the outer ring raceway (11a), an outer ring large-diameter part (11e) extending toward the other axial side with respect to the outer ring raceway (11a), a radial wall part (11c) extending from an axial end portion of the outer ring small-diameter part (11b) toward an inner diameter-side, and a folded-back part (11d) extending from a radially inner end portion of the radial wall part (11c) toward the other axial side, the outer ring (11) being a press-molded product;
an inner ring (12) including an inner ring raceway (12a) formed on an outer peripheral surface thereof, an inner ring small-diameter part (12b) extending toward one axial side with respect to the inner ring raceway (12a), and an inner ring large-diameter part (12d) extending toward the other axial side with respect to the inner ring raceway (12a);
a plurality of balls (15) rollably arranged between the outer ring raceway (11a) and the inner ring raceway (12a), the plurality of balls (15) being in contact with both the raceways at predetermined contact angles, and
a cage (16) configured to rollably hold the plurality of balls (15),
wherein the folded-back part (11d) of the outer ring (11) radially overlaps the inner ring small-diameter part (12b) with a radial gap between the folded-back part (11d) and an inner peripheral surface of the inner ring small-diameter part (12b),
**characterized in that**
the radial gap of an inner diameter-side entry (C1) formed by an axial end of the folded-back part (11d) and the inner peripheral surface of the inner ring small-diameter part (12b) is smaller than the radial gap of an inner diameter-side exit (C2) formed by an axial end of the inner ring small-diameter part (12b) and an outer peripheral surface of the folded-back part (11d), limiting the amount of lubricant to be supplied from the inner diameter-side entry gap (C1) to the bearing (10) smoothly introducing the lubricant from the inner diameter-side exit gap (C2) to the inside of the bearing (10) and controlling an oil amount of a flow of the lubricant, and
that the inner ring (12) is a rotating ring.

2. The bearing for a clutch (10) according to claim 1,
wherein the inner ring small-diameter part (12b) is formed with an inner ring taper part (12c), and a diameter of an inner peripheral surface of the inner ring taper part (12c) increases toward the axial end of the inner ring small-diameter part (12b).

3. The bearing for a clutch (10) according to claim 1,
wherein the folded-back (11d) part of the outer ring (11) is formed with an outer ring taper part (11g), and a diameter of an outer peripheral surface of the outer ring taper part (11g) increases toward the axial end of the folded-back part (11d).

4. The bearing for a clutch (10) according to any one of claims 1 to 3,
wherein a ratio of the radial gap of the inner diameter-side entry (C1) to the radial gap of the inner diameter-side exit (C2) is 1:1.2 to 1:5.0.

5. The bearing for a clutch (10) according to claim 1,
wherein the inner ring small-diameter part (12b) is formed with an inner ring taper part (12c), and a diameter of an inner peripheral surface of the inner ring taper part (12c) increases toward the axial end of the inner ring small-diameter part (12b), and
wherein the folded-back part (11d) of the outer ring (11) is formed with an outer ring taper part (11g), and a diameter of an outer peripheral surface of the outer ring taper part (11g) increases toward the axial end of the folded-back part (11d).

6. The bearing for a clutch (10) according to claim 5,
wherein a ratio of the radial gap of the inner diameter-side entry (C1) to the radial gap of the inner diameter-side exit (C2) is 1:1.4 to 1:10.0.

7. The bearing for a clutch (10) according to any one of claims 1 to 6,
wherein the inner ring (12) includes a flange part (12e) which extends from an axial end portion of the inner ring large-diameter part (12d) toward an outer diameter-side and which faces an axial end of the outer ring large-diameter part (11e) with an axial gap (C3) between the flange part (12e) and the axial end of the outer ring large-diameter part (11e), and
wherein the axial gap (C3) is larger than the radial gap of the inner diameter-side exit (C2).

8. The bearing for a clutch (10) according to any one of claims 1 to 7,
wherein the cage (16) includes a small circular ring part (16a), a large circular ring part (16b) and a plurality of column parts (16c) configured to axially connect the small circular ring part (16a) and the large circular ring part (16b), and
wherein a sum of cross-sectional areas of gaps (C4, C5) between the small circular ring part (16a) and the outer ring (11) and inner ring (12) is smaller than a sum of cross-sectional areas of gaps (C6, C7) between the large circular ring part (16b) and the outer ring (11) and inner ring (12).

9. The bearing for a clutch (10) according to any one of claims 1 to 8,
wherein the outer ring (11) and the inner ring (12) are formed by pressing a metal plate of an alloy material or a steel material, in which carbon of 0.7 to 0.9 weight%, manganese of 0.3 to 0.9 weight%, chromium of 0.3 to 1.0 weight% and silicone of 0.01 to 0.15 weight% are contained, and an ironing rate of the folded-back part (11d) is equal to or higher than 60%.

10. The bearing for a clutch (10) according to any one of claims 1 to 9,
wherein the inner ring (12) has a flange part (12e) which extends from an axial end portion of the inner ring large-diameter part (12d) toward an outer diameter-side and which faces an axial end of the outer ring large-diameter part (11e) with an axial gap (C3) between the flange part (12e) and the axial end of the outer ring large-diameter part (11 e), and
wherein at least one of an outer surface of the radial wall part (11c) of the outer ring (11) and an outer surface of the flange part (12e) of the inner ring (12) is formed with a locking part (11f, 12f) capable of engaging with a counter member.

## Patentansprüche

1. Lager für eine Kupplung (10), das umfasst:
einen Außenring (11), der integral eine Außenring-Laufbahn (11a)
die an einer Innenumfangsfläche desselben ausgebildet ist, einen Außenring-Teil (11b) mit kleinem Durchmesser, der sich in Bezug auf die Außenring-Laufbahn (11a) zu einer axialen Seite hin erstreckt, einen Außenring-Teil (11e) mit großem Durchmesser, der sich in Bezug auf die Außenring-Laufbahn (11a) zu der anderen axialen Seite hin erstreckt, einen radialen Wand-Teil (11c), der sich von einem axialen Endabschnitt des Außenring-Teils (11b) mit kleinem Durchmesser zu einer Innendurchmesser-Seite hin erstreckt, sowie einen umgebogenen Teil (11d) enthält, der sich von einem radial innenliegenden Endabschnitt des radialen Wand-Teils (11c) zu der anderen axialen Seite hin erstreckt, wobei der Außenring (11) ein formgepresstes Erzeugnis ist;
einen Innenring (12), der eine Innenring-Laufbahn (12a), die an einer Außenumfangsfläche desselben ausgebildet ist, einen Innenring-Teil (12b) mit kleinem Durchmesser, der sich in Bezug auf die Innenring-Laufbahn (12a) zu einer axialen Seite hin erstreckt, sowie einen Innenring-Teil (12d) mit großem Durchmesser enthält, der sich in Bezug auf die Innenring-Laufbahn (12a) zu der anderen axialen Seite hin erstreckt;
eine Vielzahl von Kugeln (15), die zwischen der Außenring-Laufbahn (11a) und der Innenring-Laufbahn (12a) so angeordnet sind, dass sie rollen können, wobei die Vielzahl von Kugeln (15) in vorgegebenen Kontaktwinkeln in Kontakt mit beiden Laufbahnen ist, und
einen Käfig (16), der so ausgeführt ist, dass er die Vielzahl von Kugeln (15) so hält, dass sie rollen können,
wobei der umgebogene Teil (11d) des Außenrings (11) den Innenring-Teil (12b) mit kleinem Durchmesser mit einem radialen Zwischenraum zwischen dem umgebogenen Teil (11d) und einer Innenumfangsfläche des Innenring-Teils (12b) mit kleinem Durchmesser radial überlappt,
**dadurch gekennzeichnet, dass**
der radiale Zwischenraum eines Zugangs (C1) der Innendurchmesser-Seite, der durch ein axiales Ende des umgebogenen Teils (11d) und die Innenumfangsfläche des Innenring-Teils (12b) mit kleinem Durchmesser gebildet wird, kleiner ist als der radiale Zwischenraum eines Ausgangs (C2) der Innendurchmesser-Seite, der durch ein axiales Ende des Innenring-Teils (12b) mit kleinem Durchmesser und eine Außenumfangsfläche des umgebogenen Teils (11d) gebildet wird, wodurch die Menge an Schmiermittel begrenzt wird, die über den Zugangs-Zwischenraum (C1) der Innendurchmesser-Seite dem Lager (10) zugeführt wird, und das Schmiermittel über den Ausgangs-Zwischenraum (C2) der Innendurchmesser-Seite ungehindert in das Innere des Lagers (10) eingeleitet wird und eine Ölmenge eines Stroms des Schmiermittels gesteuert wird, und
dass der Innenring (12) ein rotierender Ring ist.

2. Lager für eine Kupplung (10) nach Anspruch 1,
wobei der Innenring-Teil (12b) mit kleinem Durchmesser mit einem kegelförmigen Teil (12c) des Innenrings versehen ist und ein Durchmesser einer Innenumfangsfläche des kegelförmigen Teils (12c) des Innenrings in Richtung des axialen Endes des Innenring-Teils (12b) mit kleinem Durchmesser zunimmt.

3. Lager für eine Kupplung (10) nach Anspruch 1,
wobei der umgebogene Teil (11d) des Außenrings (11) mit einem kegelförmigen Teil (11g) des Außenrings versehen ist und ein Durchmesser einer Außenumfangsfläche des kegelförmigen Teils (11g) des Außenrings in Richtung des axialen Endes des umgebogenen Teils (11d) zunimmt.

4. Lager für eine Kupplung (10) nach einem der Ansprüche 1 bis 3,
wobei ein Verhältnis des radialen Zwischenraums des Zugangs (C1) der Innendurchmesser-Seite zu dem radialen Zwischenraum des Ausgangs (C2) der Innendurchmesser-Seite1:1,2 bis 1:5,0 beträgt.

5. Lager für eine Kupplung (10) nach Anspruch 1,
wobei der Innenring-Teil (12b) mit kleinem Durchmesser mit einem kegelförmigen Teil (12c) des Innenrings versehen ist und ein Durchmesser einer Innenumfangsfläche des kegelförmigen Teils (12c) des Innenrings in Richtung des axialen Endes des Innenring-Teils (12b) mit kleinem Durchmesser zunimmt, und
der umgebogene Teil (11d) des Außenrings (11) mit einem kegelförmigen Teil (11g) des Außenrings versehen ist und ein Durchmesser einer Außenumfangsfläche des kegelförmigen Teils (11g) des Außenrings in Richtung des axialen Endes des umgebogenen Teils (11d) zunimmt.

6. Lager für eine Kupplung (10) nach Anspruch 5,
wobei ein Verhältnis des radialen Zwischenraums des Zugangs (C1) der Innendurchmesser-Seite zu dem radialen Zwischenraum des Ausgangs (C2) der Innendurchmesser-Seite 1:1,4 bis 1:10,0 beträgt.

7. Lager für eine Kupplung (10) nach einem der Ansprüche 1 bis 6,
wobei der Innenring (12) einen Flansch-Teil (12e) enthält, der sich von einem axialen Endabschnitt des Innenring-Teils (12d) mit großem Durchmesser zu einer Außendurchmesser-Seite hin erstreckt und der einem axialen Ende des Außenring-Teils (11e) mit großem Durchmesser mit einem axialen Zwischenraum (C3) zwischen dem Flansch-Teil (12e) und dem axialen Ende des Außenring-Teils (11e) mit großem Durchmesser zugewandt ist, und
der axiale Zwischenraum (C3) größer ist als der radiale Zwischenraum des Ausgangs (C2) der Innendurchmesser-Seite.

8. Lager für eine Kupplung (10) nach einem der Ansprüche 1 bis 7,
wobei der Käfig (16) einen kleinen kreisförmigen Ring-Teil (16a), einen großen kreisförmigen Ring-Teil (16b) sowie eine Vielzahl von Säulen-Teilen (16c) enthält, die so ausgeführt sind, dass sie den kleinen kreisförmigen Ring-Teil (16a) und den großen kreisförmigen Ring-Teil (16b) axial verbinden, und
eine Summe von Querschnittsflächen von Zwischenräumen (C4, C5) zwischen dem kleinen kreisförmigen Ring-Teil (16a) und dem Außenring (11) sowie dem Innenring (12) kleiner ist als eine Summe von Querschnittsflächen von Zwischenräumen (C6, C7) zwischen dem großen kreisförmigen Ring-Teil (16b) und dem Außenring (11) sowie dem Innenring (12).

9. Lager für eine Kupplung (10) nach einem der Ansprüche 1 bis 8,
wobei der Außenring (11) und der Innenring (12) durch Pressen einer Metallplatte aus einem Legierungsmaterial oder einem Stahlmaterial ausgebildet werden, in dem Kohlenstoff von 0,7 bis 0,9 Gew.-%, Mangan von 0,3 bis 0,9 Gew.-%, Chrom von 0,3 bis 1,0 Gew.-% und Silizium von 0,01 bis 0,15 Gew.-% enthalten sind, und eine Abstreckabnahme (ironing rate) des umgebogenen Teils (11d) 60% oder mehr beträgt.

10. Lager für eine Kupplung (10) nach einem der Ansprüche 1 bis 9,
wobei der Innenring (12) einen Flansch-Teil (12e) aufweist, der sich von einem axialen Endabschnitt des Innenring-Teils (12d) mit großem Durchmesser zu einer Außendurchmesser-Seite hin erstreckt und der einem axialen Ende des Außenring-Teils (11e) mit großem Durchmesser mit einem axialen Zwischenraum (C3) zwischen dem Flansch-Teil (12e) und dem axialen Ende des Außenring-Teils (11e) mit großem Durchmesser zugewandt ist, und
eine Außenfläche des radialen Wand-Teils (11c) des Außenrings (11) oder/und eine Außenfläche des Flansch-Teils (12e) des Innenrings (12) mit einem Verriegelungs-Teil (11f, 12f) versehen ist/sind, das mit einem Gegenelement in Eingriff kommen kann.

## Revendications

1. Palier pour embrayage (10) comprenant :
un anneau externe (11) comprenant intégralement un chemin de roulement d'anneau externe (11a) formé sur sa surface périphérique interne, une partie de petit diamètre de l'anneau externe (11b) s'étendant vers un côté axial par rapport au chemin de roulement de l'anneau externe (11a), une partie de grand diamètre de l'anneau externe (11e) s'étendant vers l'autre côté axial par rapport au chemin de roulement de l'anneau externe (11a), une partie de paroi radiale (11c) s'étendant depuis une portion d'extrémité axiale de la partie de petit diamètre de l'anneau externe (11b) vers un côté diamètre interne, et une partie repliée (11d) s'étendant depuis une portion d'extrémité radialement interne de la partie de paroi radiale (11c) vers l'autre côté axial, l'anneau externe (11) étant un produit moulé par compression ;
un anneau interne (12) comprenant un chemin de roulement d'anneau interne (12a) formé sur sa surface périphérique externe, une partie de petit diamètre de l'anneau interne (12b) s'étendant vers un côté axial par rapport au chemin de roulement de l'anneau interne (12a), et une partie de grand diamètre de l'anneau interne (12d) s'étendant vers l'autre côté axial par rapport au chemin de roulement de l'anneau interne (12a) ;
une pluralité de billes (15) agencées de manière roulante entre le chemin de roulement de l'anneau externe (11a) et le chemin de roulement de l'anneau interne (12a), la pluralité de billes (15) étant en contact avec les deux chemins de roulement avec des angles de contact prédéterminés, et
une cage (16) configurée pour maintenir la pluralité de billes (15) de manière roulante,
dans lequel la partie repliée (11d) de l'anneau externe (11) chevauche radialement la partie de petit diamètre de l'anneau interne (12b) avec un intervalle radial entre la partie repliée (11d) et une surface périphérique interne de la partie de petit diamètre de l'anneau interne (12b),
**caractérisé en ce que**
l'intervalle radial d'une entrée côté diamètre interne (C1) formée par une extrémité axiale de la partie repliée (11d) et la surface périphérique interne de la partie de petit diamètre de l'anneau interne (12b) est inférieur à l'intervalle radial d'une sortie côté diamètre interne (C2) formée par une extrémité axiale de la partie de petit diamètre de l'anneau interne (12b) et une surface périphérique externe de la partie repliée (11d), limitant la quantité de lubrifiant à fournir au palier (10) depuis l'intervalle d'entrée côté diamètre interne (C1) en introduisant régulièrement le lubrifiant à l'intérieur du palier (10) depuis l'intervalle de sortie côté diamètre interne (C2) et contrôlant la quantité d'huile d'un flux de lubrifiant, et **en ce que** l'anneau interne (12) est un anneau rotatif.

2. Palier pour embrayage (10) selon la revendication 1,
dans lequel la partie de petit diamètre de l'anneau interne (12b) est formée avec une partie conique de l'anneau interne (12c), et un diamètre d'une surface périphérique interne de la partie conique de l'anneau interne (12c) augmente vers l'extrémité axiale de la partie de petit diamètre de l'anneau interne (12b).

3. Palier pour embrayage (10) selon la revendication 1,
dans lequel la partie repliée (11d) de l'anneau externe (11) est formée avec une partie conique de l'anneau externe (11g), et le diamètre d'une surface périphérique externe de la partie conique de l'anneau externe (11g) augmente vers l'extrémité axiale de la partie repliée (11d).

4. Palier pour embrayage (10) selon l'une quelconque des revendications 1 à 3,
dans lequel le ratio de l'intervalle radial de l'entrée côté diamètre interne (C1) par l'intervalle radial de la sortie côté diamètre interne (C2) est de 1:1,2 à 1:5,0.

5. Palier pour embrayage (10) selon la revendication 1,
dans lequel la partie de petit diamètre de l'anneau interne (12b) est formée avec une partie conique de l'anneau interne (12c), et un diamètre d'une surface périphérique interne de la partie conique de l'anneau interne (12c) augmente vers l'extrémité axiale de la partie de petit diamètre de l'anneau interne (12b), et
dans lequel la partie repliée (11d) de l'anneau externe (11) est formée avec une partie conique de l'anneau externe (11g), et le diamètre d'une surface périphérique externe de la partie conique de l'anneau externe (11g) augmente vers l'extrémité axiale de la partie repliée (11d).

6. Palier pour embrayage (10) selon la revendication 5,
dans lequel le ratio de l'intervalle radial de l'entrée côté diamètre interne (C1) par l'intervalle radial de la sortie côté diamètre interne (C2) est de 1:1,4 à 1:10,0.

7. Palier pour embrayage (10) selon l'une quelconque des revendications 1 à 6,
dans lequel l'anneau interne (12) comprend une partie de bride (12e) qui s'étend depuis une portion d'extrémité axiale de la partie à grand diamètre de l'anneau interne (12d) vers un côté diamètre externe, et qui fait face à une extrémité axiale de la partie de grand diamètre de l'anneau externe (11e) avec un intervalle axial (C3) entre la partie de bride (12e) et l'extrémité axiale de la partie de grand diamètre de l'anneau externe (11e), et
dans lequel l'intervalle axial (C3) est supérieur à l'intervalle radial de la sortie côté diamètre interne (C2).

8. Palier pour embrayage (10) selon l'une quelconque des revendications 1 à 7,
dans lequel la cage (16) comprend une petite partie d'anneau circulaire (16a), une grande partie d'anneau circulaire (16b) et une pluralité de parties de colonne (16c) configurées pour connecter axialement la petite partie d'anneau circulaire (16a) et la grande partie d'anneau circulaire (16b), et
dans lequel la somme des surfaces en section transversale des intervalles (C4, C5) entre la petite partie d'anneau circulaire (16a) et l'anneau externe (11) et l'anneau interne (12) est inférieure à la somme des surfaces en section transversale des intervalles (C6, C7) entre la grande partie d'anneau circulaire (16b) et l'anneau externe (11) et l'anneau interne (12).

9. Palier pour embrayage (10) selon l'une quelconque des revendications 1 à 8,
dans lequel l'anneau externe (11) et l'anneau interne (12) sont formés par pressage d'une plaque de métal d'un matériau en alliage ou d'un matériau en acier, contenant un pourcentage massique de carbone de 0,7 % mas à 0,9 % mas, de manganèse de 0,3 % mas à 0,9 % mas, de chrome de 0,3 % mas à 1,0 % mas et de silicium de 0,01 à 0,15 % mas, et la teneur en fer de la partie repliée (11d) est supérieure ou égale à 60 %.

10. Palier pour embrayage (10) selon l'une quelconque des revendications 1 à 9,
dans lequel l'anneau interne (12) comprend une partie de bride (12e) qui s'étend depuis une portion d'extrémité axiale de la partie à grand diamètre de l'anneau interne (12d) vers un côté diamètre externe, et qui fait face à une extrémité axiale de la partie de grand diamètre de l'anneau externe (11e) avec un intervalle axial (C3) entre la partie de bride (12e) et l'extrémité axiale de la partie de grand diamètre de l'anneau externe (11e), et
dans lequel au moins une surface parmi une surface externe de la partie de paroi radiale (11c) de l'anneau externe (11) et une surface externe de la partie de bride (12e) de l'anneau interne (12) est formée avec une partie de verrouillage (11f, 12f) capable de s'engager avec un contre-élément.
